# EUROPEAN PATENT APPLICATION

(11) **EP 4 714 927 A1**
(43) Date of publication of application: **25.03.2026**
(21) Application number: 24201742.4
(22) Date of filing: 20.09.2024
(51) Int. Cl.: C04B 41/00, C08L 33/10

(54) **A REACTIVE RESIN COMPOSITION COMPRISING A PEROXIDE-FREE INITIATOR SYSTEM WITH A SULFINATE AND A TERTIARY AMINE**

(71) Applicant: Hilti Aktiengesellschaft, 9494 Schaan (LI)
(72) Inventor: Kumru, Memet-Emin, 86199 Augsburg (DE)
(74) Representative: Hilti Aktiengesellschaft Corporate Intellectual Property

(57) **Abstract**

Present invention relates to a reactive resin composition comprising a peroxide-free initiator system, a multi-component reactive resin system comprising the reactive resin composition, the use of the reactive resin composition for fastening anchoring means in substrates and a method for the chemical fastening of construction elements in boreholes using the reactive resin composition or the multi-component reactive resin system.

## Description

Present invention relates to a reactive resin composition comprising a peroxide-free initiator system, a multi-component reactive resin system comprising the reactive resin composition, the use of the reactive resin composition for fastening anchoring means in substrates and a method for the chemical fastening of construction elements in boreholes using the reactive resin composition or the multi-component reactive resin system.

The use of reactive resin mixtures based on radically polymerizable compounds has long been known. In the field of fastening technology, the use of reactive resin mixtures as organic binders has gained acceptance in chemical fastening technology. These are often two-component systems, wherein the A component contains the reactive resin mixture and the B component contains the hardening agent. Other common constituents such as fillers, accelerators, stabilizers thixotropic agents, phlegmatizers, solvents, including reactive solvents, can be contained in one and/or the other component. By mixing the two components, the reaction is then initiated by radical formation and the resin is hardened to form a thermoset.

Radically hardening systems, in particular systems which cure at room temperature, require so-called radical starters, also called initiators, so that the radical polymerization can be triggered. In the field of chemical fastening technology, the hardener composition described in application DE 3226602 A1, comprising benzoyl peroxide as a radical starter and an aminic compound as an accelerator, and the hardener composition described in the application EP 1586569 A1, comprising a perester as a hardener and a metal compound as an accelerator, have gained acceptance because of their properties. These hardener compositions allow rapid and quite complete curing even at very low temperatures down to -30°C. In addition, these systems are very robust with regard to the mixing ratios of reactive resin and hardener. Thus, they are suitable for use under construction site conditions.

However, a disadvantage of these hardener compositions is that peroxides are used as radical starters in both cases. These are thermally sensitive and react very sensitively to impurities. This leads to considerable limitations in the formulation of pasty hardener components, primarily for injection mortars with respect to storage temperatures, storage stability and the selection of suitable components. To enable the use of peroxides, such as dibenzoyl peroxide, peresters and the like, phlegmatizers, such as phthalates or water, are added to stabilize them. However, these significantly impair the mechanical performance of reactive resin mixtures when used, for example as reaction resin mortars for chemical fastening.

Furthermore, these known hardener compositions are disadvantageous insofar as they have to contain peroxide amounts of 0.5 weight % and greater, which is problematic, because peroxide-containing products, starting at a concentration of 1%, for example for dibenzoyl peroxide, have to be labeled as sensitizing in some countries. The same applies to the aminic accelerators, which are sometimes also subject to labeling.

Until now, a few attempts have been made to reduce the amount of peroxide in such a way that it falls below the labeling limit, or to do without the use of peroxides as radical initiators.

DE 102010051818 B3 discloses compositions for chemical fastening, the peroxide quantity of which was reduced. A disadvantage of these compositions is that the load values achievable therewith are not particularly high.

DE 102011078785 A1 describes compositions for chemical fastening which use a peroxide-free hardener system based on 1,3-dioxo compounds as hardeners and a manganese compound as a co-initiator. Although peroxides can be dispensed with, these compositions have the disadvantage that they exhibit a high temperature dependence during hardening. Although the hardener system leads to good curing of the compositions at room temperature and at elevated temperatures, the hardening reaction at low temperatures is too slow or comes to a complete halt, so that the curing is insufficient or is totally lacking.

US 2016/0040026 A1 describes peroxide free curable compositions for use as adhesives comprising free-radically polymerizable compounds, a beta-dicarbonyl compound and an oxide of copper. US2018/0179304 A1 discloses a hardener system for a synthetic resin composition which includes free-radical-polymerisable compounds comprising a metal salt, an aldehyde and/or ketone, a primary amine, and an imine.

Alternative systems using peroxides have been described in JP2005054052 wherein a curing agent is disclosed comprising tertiary alkylperoxy-branched alkyl ester, cobalt and α-acetylbutyrolactone. US2017/0247547 A1 discloses free-radically curable adhesives comprising organic peroxide, polyvalent metal compound and a quarternary ammonium halide. US2016039960 describes a reactive resin composition comprising dialkyl peroxide, amine, copper and 2-acetylbutyrolactone. WO2019/197190 A1 discloses use of saccharin in combination with aldimine and copper for the hardening system of radically polymerizable compositions.

There is therefore a need for a reactive resin composition comprising a peroxide-free initiator system comprising the at least one radically polymerizable methacrylate compound for use as reaction resin mortars, in particular for chemical fastening, which does not have the disadvantages of the known reactive resin compositions.

Further, there is a need for a reactive resin composition comprising a peroxide-free initiator system comprising the at least one radically polymerizable methacrylate compound for chemical fastening, with which mortars can be provided, which can be formulated low-labeled or label-free, which have workable curing times that are suitable for chemical anchor application, curing of which is less temperature-dependent than the known hardener systems and with which a better bonding of the cured mortar compositions to the substrate and thus a higher load level of a fastening arrangement can be achieved.

The object of the present invention is now to provide a reactive resin composition for use in reactive resin mortars for the chemical fastening of anchoring means which dispenses with the use of peroxides, peresters, perketals or hydroperoxides, and therefore is labeled less critically, thereby enabling the formation of label-free products, and nevertheless has the advantageous properties of the peroxide-containing hardener systems from the prior art, such as workable curing times, achieving a high load level and a largely temperature-independent curing.

This object is achieved by providing a reactive resin composition according to claim 1 which is free of peroxides, peresters, perketals and hydroperoxides.

Surprisingly, it has been found that a reactive resin composition comprising at least one radically polymerizable methacrylate comprising compound can be effectively hardened by an initiator system comprising at least one compound of Formula (I) in combination with at least one transition metal, at least one sulfinate salt and/or at least one sulfinic acid and at least one tertiary amine and/or at least one heterocyclic compound comprising at least one N-N single bond. It was also surprisingly found that reactive resin compositions as described herewith can be used as anchoring means or a mortar for fastening in substrates. The peroxides used to date, which, among other things, lead to the labeling of the mortar compositions, can thus be replaced by label-free compounds, without having to dispense with the advantageous properties of the peroxides, such as workable curing times, curing that is largely temperature-independent and having high load levels. It was also surprisingly found that the mortars comprising the reactive resin composition according to the present invention showed better performance of bond strength in comparison to the label-free commercially available mortars.

By dispensing with the use of peroxides, peresters, perketals or hydroperoxides, the reactive resin composition according to the invention have a number of further advantages compared to the systems known from the prior art. For example, there are no safety-relevant limitations with respect to transport and storage of the components, in particular no labeling as oxidizing. Furthermore, it is possible to dispense with the use of phlegmatizers, which as plasticizers influence the mechanical performance of the cured reaction resins. In addition, less limitations with regard to the further recipe components have to be taken into account in the formulation of multi-component reaction resin compositions.

A first subject matter of the invention is a reactive resin composition according to claim 1. A second subject matter of the invention is a multi-component reactive resin system according to claim 14. A third subject matter of the present invention is a use of the reactive resin composition or the multi-component reactive resin system for fastening anchoring means in substrates. A fourth subject matter of the present invention is a method for chemical fastening of construction elements in boreholes wherein the resin composition or the multi-component reactive resin system according to the present invention is used for chemical fastening.

Within the meaning of the invention:
- "=", in designations such as C=O, S=O, or O=S=O, indicates a double bond between, for example, C and O (i.e. carbon and oxygen);
- a range delimited by numbers, e.g. "*from 80 to 120 weight* %" means that the two corner values and each value within that range are individually disclosed;
- "*a*" *or* "*an*" as the article preceding a class of chemical compounds, e.g., preceding the word "enamine," means that one or more compounds included in this class of chemical compounds, e.g., various enamines, may be meant. In a preferred embodiment, this article means only a single compound;
- "*at least one*" means numerically "*one or more.*" In a preferred embodiment, the term numerically means "one"; in another embodiment the term may mean "two", "three", "four", "five", "six", "seven", "eight", "nine", "ten" or respectively any number more than "one";
- "*activator*" or "*accelerator*" means a substance which reacts with the initiator so that larger quantities of radicals are prepared by the initiator even at low temperatures, or which catalyzes the decomposition reaction of the initiator;
- "*cycloalkyl compounds*" are compounds having a carbocyclic ring structure, excluding benzene derivatives or other aromatic systems;
- "*alkyl*" means a saturated hydrocarbon functional group that can be branched or unbranched; preferably a C1-C7 alkyl, particularly preferably a C1-C4 alkyl, i.e., an alkyl selected from the group consisting of methyl, ethyl, n-propyl, iso-propyl, n-butyl, iso-butyl, and tert-butyl; methyl, ethyl and tert-butyl are particularly preferred and methyl is very particularly preferred;
- "*araliphatic group*" are aliphatic compounds having an aromatic backbone such that, the bond which is present between, for example, A-X in the compound of Formula (I) is bonded to the aliphatic rather than the aromatic part of the group;
- "*aromatic compounds*" are compounds which follow Hückel's rule (4n+2);
- "*co-activator*" means a substance whose presence enhances the reaction of the hardener with the activator;
- "*cold curing*" means that a reactive resin composition can cure completely at room temperature;
- "*component (A)*" is a component of the multi-component resin system which comprises at least one compound of Formula (I) and at least one transition metal in the form of a salt, a compound, a complex or a mixture of two or more thereof and optionally at least one filler and/or at least one rheology additive and/or further additives;
- "*component (B)*" is a component of the multi-component resin system which comprises at least one sulfinate salt and/or sulfinic acid, at least one tertiary amine and/or at least one heterocyclic compound comprising at least one N-N single bond and optionally at least one filler and/or at least one rheology additive and/or further additives;
- "*contain*", "*comprise*" and "*include*" mean that further constituents may be present in addition to those mentioned. These terms are intended to be inclusive and therefore also encompass "*consist of.*" "*Consist* of" is intended to be exclusive and means that no further constituents may be present. In a preferred embodiment, the terms "contain", "comprise" and "include" mean the term "consist of";
- "*filler*" refers to an organic or inorganic, in particular inorganic, compound;
- "*initiator system*," means a combination of the actual hardening agent (initiator) and activator and in some cases a further activator (co-activator);
- "*hydroxyalkyl*" means an alkyl carrying at least one hydroxyl group as a substituent;
- "*inhibitor*" means a substance which suppresses unwanted radical polymerization during the synthesis or storage of a resin or a resin-containing composition (these substances are also referred to in the art as "*stabilizers*"), or which delays radical polymerization of a resin (usually in conjunction with an accelerator or activator) after an initiator has been added (these substances are also referred to in the art as "*inhibitors*"; the particular meaning of the term becomes clear from the context);
- "*initiator*," "*hardener*" or "*hardening agent*" means a substance which (usually in combination with an accelerator) forms reaction-initiating radicals;
- "*isocyanates*" are compounds that have a functional isocyanate group -N=C=O and are characterized by the structural unit R-N=C=O;
- "*multi-component system*" or "*multi-component reactive resin system*" means a reactive resin system comprising a plurality of separately stored components, including a reactive resin component (A) and a hardener component (B), so that the reactive resin contained in the reactive resin component is hardened only after all of the components are mixed;
- "*(meth*)*acryl...*/*...(meth*)*acryl...*" means both the "methacryl.../...methacryl..." and the "acryl.../...acryl..." compounds;
- "*peroxide-free*" means that no peroxides, peresters, perketals, or hydroperoxides are added;
- "*reactive resin*" means a usually solid or high-viscosity "*radically polymerizable*," i.e., curable, compound, which cures by means of polymerization and forms a resin matrix; the reactive resin is the reaction product of a bulk reaction per se; this also includes the reaction batch for producing the backbone resin after the reaction has ended, which backbone resin is present without the product being isolated and therefore can contain the reactive resin, a reactive diluent, a stabilizer and a catalyst, if used, in addition to the radically polymerizable compound;
- "*reactive diluents*" means liquid or low-viscosity monomers and backbone resins which dilute other backbone resins or the reactive resin master batch and thereby impart the viscosity necessary for application thereof, which contain functional groups capable of reacting with the reactive resin, and which for the most part become a constituent of the hardened composition (e.g., of the mortar) during polymerization (hardening); reactive diluents are also referred to as copolymerizable monomers;
- "*rheology additive*" refers to additives which are able to influence the viscosity behaviour the reactive resin composition during storage, application and/or curing. The rheology additive prevents, inter alia, sedimentation of the fillers. It also improves the miscibility of the components and prevents possible phase separation;
- "*salt*" is a compound that is made up of positively charged ion (cation) and negatively charged ion (anion). There are ionic bonds between these ions;
- "*tertiary amine*" is an organic chemical compound comprising a nitrogen having three organic substituents.

All standards cited in this text (e.g., DIN standards) were used in the version that was current on the filing date of this application.

Present invention relates to a reactive resin composition comprising a peroxide-free initiator system and at least one radically polymerizable compound, wherein the at least one radically polymerizable compound is a methacrylate comprising compound,
wherein the peroxide-free initiator system comprises:
a) at least one compound of Formula (I) 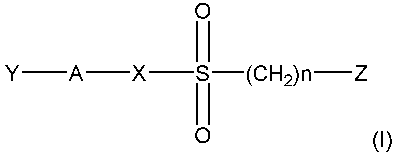 wherein independently from each other:
   Y is optional; or Y is an optionally substituted aromatic ring;
   A is C=O, S=O, O=S=O, H, C1-C6 alkyl, C1-C8 cycloalkyl, C1-C8 heterocycloalkyl,
   C1-C6 alkyl ester, or at least one optionally substituted araliphatic group;
   X is NH, NHN, urea, NF, NCI, NBr, Nl, N-formyl, N-methacryl, or N⁻(cation),
   wherein preferably 'cation' is selected from the cation of lithium, sodium, potassium, calcium, or combinations of two or more thereof, more preferably 'cation' is sodium or calcium cation;
   Z is an aromatic ring, a phthalimide, or an isoquinolinedione, independently from each other optionally substituted; or wherein Y and Z are joined together in the same aromatic ring or ring structure;
   n is 0 to 4;
b) at least one transition metal in the form of a salt, a compound, a complex or a mixture of two or more thereof;
c) at least one sulfinate salt and/or at least one sulfinic acid; and
d) at least one tertiary amine and/or at least one heterocyclic compound comprising at least one N-N single bond, wherein the N-N bond is in the ring of said heterocycle.

### Compound of Formula (I)

In content of the present invention compound of Formula (I) can be described as a co-activator.

It is preferred that the optionally substituted aromatic ring in Y, at least one optionally substituted araliphatic group in A and optionally substituted aromatic ring, a phthalimide, or an isoquinolinedione in Z are optionally and independently from each other substituted on the corresponding aromatic ring at up to five positions by at least one C1-C6 alkyl group, or at least one alkoxy group, or at least one halo group, or combinations of two or more thereof.

It is preferred that when Y is absent, A is H, branched or linear C1-C6 alkyl, (preferably methyl, ethyl, propyl, butyl), C1-C8 cycloalkyl, (preferably cyclohexyl), C1-C8 heterocycloalkyl (preferably pyrrolizidine or azepane), C1-C6 alkyl ester (preferably C1-C4 (branched or linear) alkyl ester or dimethylethyl ester) or at least one optionally substituted branched or unbrached araliphatic group, (preferably diphenylpropane). It is also preferred that the bond between A and X when applicable is between X and the heteroatom of the A constituent.

It is preferred that in compound of Formula (I), Y is a phenyl, or biphenyl, or diphenyl methane or diphenyl isopropane, optionally substituted at up to five positions by at least one C1-C6 alkyl group, or at least one alkoxy group, or at least one halo group, or combinations of two or more thereof, preferably Y is phenyl or an alkyl (preferably methyl or tert-butyl) substituted phenyl group.

It is preferred that when Y is an optionally substituted aromatic ring as described above, A is C=O or O=S=O.

It is preferred that that in compound of Formula (I), X is NH, NHN, NH₂, urea, or N⁻ (cation), wherein the cation is sodium or calcium.

It is preferred that Z is a phenyl, or biphenyl, or diphenyl methane or diphenyl isopropane, optionally substituted at up to five positions by at least one C1-C6 alkyl group, or at least one alkoxy group, or at least one halo group, or combinations of two or more thereof, preferably Z is phenyl or an alkyl (preferably methyl or tert-butyl) substituted phenyl group.

In one embodiment, it is preferred that Y and Z are joined together in the same aromatic ring structure, such as structures A through structure H below:

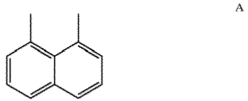

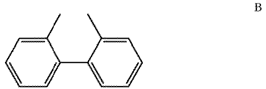

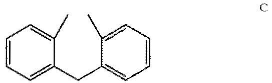

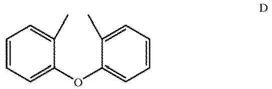

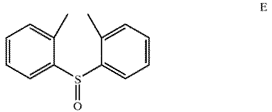

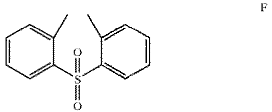

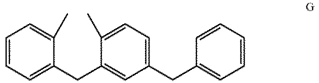

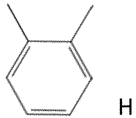

It is preferred that the compound of Formula (I) is selected from the group consisting of 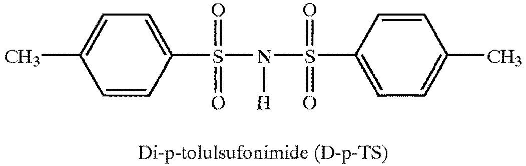 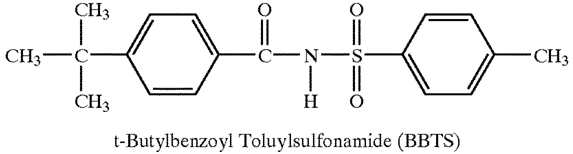 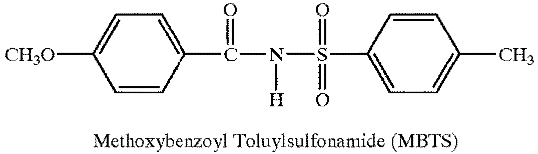 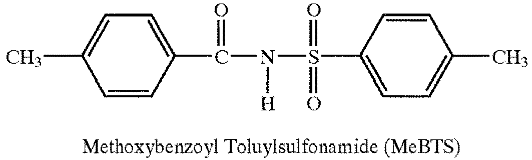 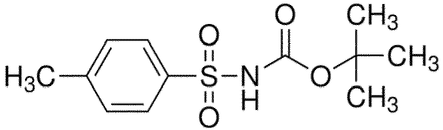 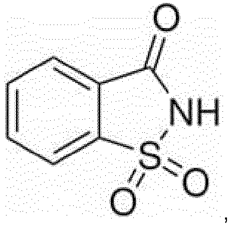 *N*-methyl-*p*-toluenesulfonamide, *p*-toluenesulfonamide, *N-*cyclohexyl-p-toluenesulfonamide, tolbutamide, tolazamide, gliquidone, gliclazide, 1,3-diphenylacetone-*p*-tolsylhydrazone, *N*-formylsaccharin, saccharin methacrylamide, *N-*fluorosaccharin, *N*-chlorosaccharin, *N*-bromosaccharin, *N*-iodosaccharin, lithium saccharin, sodium saccharin, potassium saccharin, calcium saccharin, or a mixture of two or more thereof, more preferably selected from the group consisting of saccharin, sodium saccharin, di-toluene-4-sulfonamide, or a mixture of two or more thereof.

It is preferred that the compound of Formula (I) is selected from the group consisting of saccharin, sacchrain derivatives, saccharin salts, salts of saccharin derivatives, preferalby selected from from a group comprising of saccharin, *N*-formylsaccharin, saccharin methacrylamide, *N*-fluorosaccharin, *N*-chlorosaccharin, *N*-bromosaccharin, *N-*iodosaccharin, lithium saccharin, sodium sacchrin, potassium saccharin, calcium saccharin, or a mixture of two or more thereof, more preferably selected from the group consisting of saccharin, *N*-formylsaccharin, saccharin methacrylamide, *N-*bromosaccharin, or a mixture of two or more thereof. It is preferred that the compound of Formula (I) is saccharin and/or di-toluene-4-sulfonamide.

It is preferred that the compound of Formula (I) is selected from the group consisting of saccharin, saccharin derivatives, saccharin salts, di-toluene-4-sulfonamide, *N*-methyl-*p-*toluenesulfonamide, *p*-toluenesulfonamide, *N*-cyclohexyl-*p*-toluenesulfonamide, Tolbutamide, Tolazamide, Gliquidone, Gliclazide, 1,3-diphenylacetone p-tosylhydrazone, t-Butylbezoyl toluylsulfonamide, methylbenzoyl toluylsulfonamide, methoxybenzoyl toluylsulfonamide or a mixture of two or more thereof, more preferably selected from the group comprising saccharin, sodium saccharin, di-toluene-4-sulfonamide or a mixture of two or more thereof, more preferably saccharin and/or di-toluene-4-sulfonamide. It is preferred that the compound of Formula (I) is di-toluene-4-sulfonamide.

It is preferred that the amount of at least one compound of Formula (I) in the reactive resin composition is in the range of from 0.001 to 10 weight % based on the total weight of the reactive resin composition, more preferably in the range of from 0.01 to 5 weight %, more preferably in the range of from 0.1 to 4 weight %, more preferably 0.2 to 3 weight %.

It is preferred that at least one compound of Formula (I) is comprised in component (A) and/or component (B), preferably only in component (A) of the two-component system.

It is preferred that the amount of at least one compound of Formula (I) in component (A) is in the range of from 0.001 to 15 weight %, more preferably in the range of from 0.1 to 10 weight %, more preferably in the range of from 0.5 to 4 weight %, more preferably in the range of from 0.5 to 3 weight % based on the total weight of component (A) of the two-component system.

It is possible to use the compound of Formula (I) in the reactive resin composition according to the present invention in form of a solution. Thus, it is also preferred that compound of Formula (I) is used in a solution, preferably an alcohol solution, preferably in a methanol solution, preferably in 5 to 40 weight % of Formula (I) methanol solution, more preferably in a 10 weight % of Formula (I) methanol solution.

It is preferred that the amount of at least one compound of Formula (I) solution as presently defined (preferably in a 10 weight % of Formula (I) methanol solution) in component (A) is in the range of from 0.001 to 15 weight %, more preferably in the range of from 0.1 to 10 weight %, more preferably in the range of from 0.5 to 4 weight %, more preferably in the range of from 0.5 to 3 weight % based on the total weight of component (A) of the two-component system.

It is preferred that the amount of at least one compound of Formula (I) solution as presently defined (preferably in a 10 weight % of Formula (I) methanol solution) in the reactive resin composition is in the range of from 0.001 to 10 weight %, more preferably in the range of from 0.01 to 5 weight %, more preferably in the range of from 0.1 to 4 weight %, more preferably 0.2 to 3 weight % based on the total weight of the reactive resin composition.

### Transition metal

The initiation of the polymerization and thus the hardening of the reactive resins is based on first reaction of co-activator with an activator. The activator in turn is then able to activate the hardener through a redox reaction. Suitable activators are transition metals in the form of salts and compounds, which also includes oxides and complexes.

It is preferred that the at least one transition metal in the form of a salt, a compound, a complex or a mixture of two or more thereof is selected from the group consisting of copper, iron, vanadium, manganese, cerium, cobalt, zirconium, bismuth, or mixtures of two or more thereof, preferably the at least one transition metal is copper in the form of a salt, a compound, a complex or a mixture of two or more thereof.

It is preferred that at least one transition metal is in the form of a metal salt, which also includes metal complexes and metal oxides, these are preferably one or more metal salts or in particular one or more salts of organic and/or inorganic acids with metals. In particular, the metal salts are selected from the group consisting of vanadium, iron, manganese and copper, in particular in the form of salts or complexes with inorganic acid residues, such as sulfate and/or carbonate residues and/or organic acid residues, for example carboxylate residues, wherein the organic acids are straight-chain or branched and preferably saturated, such as carboxylates with CH₃, C₂-C₂₀-alkyl, a C₆-C₂₄-aryl radical or C₇-C₃₀-aralkyl radical, for example octoate, for example 2-ethylhexanoate (isooctanoate), neodecanoate, or acetylacetonate. Particular preference is given to salts which are soluble in organic media, such as carboxylates, for example octanoates, naphthenates, acetylacetonates, acetates and quinolates. Manganese, vanadium, cobalt and copper carboxylates are very particularly preferred.

The transition metals are reactively different. Reactivity depends on different factors, such as the oxidation potential thereof, the salts and compounds used, in some cases also on the form in which the transition metals are present, for example in solutions, wherein the solvent can also influence the reactivity. When using less reactive transition metal salts and compounds which have a lower activity, such as, for example, iron and copper salts and compounds, a further activator (co-activator) is required, so that the initiator system has sufficient activity in order to be able to initiate the radical polymerization under construction site conditions.

It is preferred that copper is used as activator, phenols, such as butylhydroxytoluene, hydroquinone, pyrocatechol and their alkylated or etherified derivatives (e.g., tert-butylpyrocatechol or hydroquinone monomethyl ether), phosphites such as triethyl or triphenyl phosphate), phthalimide, and the like, are suitable coactivators for the peroxide-free initiator system used in the reactive resin composition according to the present invention.

It is preferred that the at least one transition metal is at least one copper salt, preferably at least one copper (II) salt. It is preferred that the at least one transition metal is selected from the group consisting of copper (II) 2-ethylhexanoate, copper (II) acetate monohydrate, copper (II) 2-ethylhexanoate, copper (II) chloride, copper (II) bromide, copper naphthenate (TIB KAT 808), copper oleate (TIB KAT 804 L) and combinations of two or more thereof, preferably at least one transition metal is copper(ll) acetylacetonate.

It is preferred that the amount of the at least one transition metal in the reactive resin composition is in the range of from 0.0001 to 10 weight %, more preferably in the range of from 0.001 to 5 weight %, preferably 0.003 to 2.0 weight % based on the total weight of the reactive resin composition.

It is preferred that at least one transition metal in the form of a salt, a compound, a complex or a mixture of two or more thereof is comprised in component (A) and/or component (B), preferably only in component (A) of the two-component system.

It is preferred that the amount of at least one transition metal in component (A) is in the range of from 0.001 to 10 weight %, more preferably in the range of from 0.001 to 5 weight %, more preferably in the range of from 0.005 to 4 weight %, more preferably less than 2 weight % based on the total weight of component (A) of the two-component system.

### Sulfinate salt and sulfinic acid

The reactive resin composition according to the present invention comprises at least one sulfinate salt and/or at least one sulfinic acid. Without wishing to be bound by theory, at least one sulfinate and/or at least one sulfinic acid are initiator/hardener for the reactive resin composition according to the present invention.

It is preferred that the at least one sulfinate salt (or corresponding sulfinic acid thereof) is connected to an aromatic ring, it is preferred that at least one sulfinate salt is an aryl sulfinate salt optionally substituted at up to five positions by at least one C1-C6 alkyl group, alkyl sulfinate salt or a mixture of two or more thereof. It is preferred that the sulfinic acid is the corresponding acid of the sulfinate salt as presently defined, such as at least one sulfinic acid is an aryl sulfinic acid optionally substituted at up to five positions by at least one C1-C6 alkyl group, alkyl sulfinate salt or a mixture of two or more thereof.

It is preferred that the at least one sulfinate salt is sodium *p*-toluenesulfinate, sodium *p-*toluenesulfinate hydrate, sodium 4-vinylbenzenesulfinate, sodium 4-tert-butylbenzenesulfinate, sodium propane-2-sulfinate, sodium 1-methyl 3-sulfinopropanoate or mixture of two or more thereof. It is preferred that the at least one sulfinic acid is the corresponding acid of the sulfinate salts as defined above. It is particularly preferred that the at least one sulfinate salt is sodium *p*-toluenesulfinate and/or sodium *p*-toluenesulfinate hydrate. In another embodiment, it is preferred that the at least one sulfinic acid is based on the sulfinate salts as defined herewith and listed above.

It is preferred that the amount of one sulfinate salt and/or at least one sulfinic acid in the reactive resin composition is in the range of from 0.001 to 10 weight %, more preferably in the range of from 0.01 to 5 weight %, more preferably 0.2 to 3 weight %, more preferably 0.1 to 2 weight % based on the total weight of the reactive resin composition. It is preferred that at least one sulfinate salt and/or at least one sulfinic acid is comprised in component (A) and/or component (B), preferably only in component (B) of the two-component system.

It is preferred that the amount of at least one sulfinate salt and/or at least one sulfinic acid in the component (B) is in the range of from 0.001 to 15 weight %, more preferably in the range of from 0.1 to 10 weight %, more preferably in the range of from 0.5 to 4 weight %, more preferably in the range of from 0.5 to 3 weight %, based on the total weight of component (B) of the two-component system.

It is possible to use at least one sulfinate salt and/or at least one sulfinic acid in form of a solution, preferably an aqueous solution in the reactive resin composition according to the present invention. It is preferred that at least one sulfinate salt and/or at least one sulfinic acid is in a 10 to 40 weight % aqueous solution, preferably 10 weight % at least one sulfinate salt and/or at least one sulfinic acid aqueous solution.

It is preferred that the amount of one sulfinate salt and/or at least one sulfinic acid in form of an aqueous solution as presently defined in the reactive resin composition is in the range of from 0.001 to 10 weight %, more preferably in the range of from 0.01 to 5 weight %, more preferably 0.2 to 3 weight %, more preferably 0.1 to 2 weight % based on the total weight of the reactive resin composition.

It is preferred that at least one sulfinate salt and/or at least one sulfinic acid in form of an aqueous solution as presently defined is comprised in component (A) and/or component (B), preferably only in component (B) of the two-component system.

It is preferred that the amount of at least one sulfinate salt and/or at least one sulfinic acid in form of an aqueous solution as presently defined in the component (B) is in the range of from 0.001 to 15 weight %, more preferably in the range of from 0.1 to 10 weight %, more preferably in the range of from 0.5 to 4 weight %, more preferably in the range of from 0.5 to 3 weight %, based on the total weight of component (B) of the two-component system.

### Tertiary amine

The reactive resin composition according to the present invention comprises at least one tertiary amine. At least one tertiary amine can be in principle any organic compound comprising at least one nitrogen, (preferably at least two or three nitrogen), wherein at least one nitrogen is covalently bonded to three organic substituents. It is understood that the bond between the at least one nitrogen and the three organic substituents is between nitrogen and a carbon atom, such that if R1 is an ethoxy group, it is understood, that the bond is between nitrogen and the carbon of the methoxy group.

The at least one tertiary amine comprising one nitrogen has a formula NR1R2R3, wherein R1, R2, and R3 are independently from each other selected from the group comprising C1-C8 linear or branched, optionally substituted, alkyl group; C1-C8 optionally substituted cycloalkyl group; optionally substituted heteroaryl group; optionally substituted up to 4 positions aryl group; optionally substituted up to 4 positions araliphatic group; or optionally substituted heteroaromatic ring (preferably 5 membered, 6 membered ring or fused heterocyclic ring system).

It is preferred that R1, R2, and R3 are independently from each other selected from the group comprising C1-C4 alkyl group (preferably methyl, ethyl, n-propyl, iso-propyl, n-butyl, iso-butyl, and tert-butyl), C1-C3 alkoxy group (preferably ethoxy, isopropoxy, tert-butoxy), optionally substituted up to 4 positions aryl group (preferably phenyl, phenol, tolyl, xylyl, benzaldehyde, tert-butylbenzene), optionally substituted coumarin ring. It is preferred that R1, R2, and R3 are independently from each other selected from methyl, ethyl, n-propyl, iso-propyl, n-butyl, iso-butyl, ethoxy, isopropoxy, phenyl, hydroxy phenyl, tolyl, xylyl, benzaldehyde, tert-butylbenzene.

It is preferred that at least one tertiary amine is an aromatic tertiary amine. It is understood that an aromatic amine is an organic compound consisting of an aromatic ring attached to an amine.

It is preferred that at least one tertiary amine is selected from the group comprising para-toluidine ethoxylate(Bisomer PTE), *N*,*N*-dimethylaniline, *N*,*N*-dimethyl-p-toluidine, *N,N-*dimethyl-*o*-toluidine, 4-*tert*-butyl-*N*,*N*-dimethylaniline, diethylaniline, 4-diethylaminobenzaldehyde, 2,2'-(4-methylphenylimino)diethanol, 2,2'-(*m-*tolylimino)diethanol, diisopropanol-*p*-toluidine, 2-(*N*-ethyl-*N*-*m*-toluidino)ethanol, 7-diethylamino-4-methylcoumarin, crystal violet and combinations of two or more thereof, more preferably at least one tertiary amine is selected from the group comprising *N*,*N-*dimethyl-*p*-toluidine, Leucocrystal Violet, 2-(*N*-ethyl-*N*-*m*-toluidino)ethanol, 4-*tert*-butyl-*N*,*N*-dimethylaniline and combinations of two or more thereof.

The at least one tertiary amine comprised in the reactive resin composition according to the invention preferably comprises at least three tertiary amino groups. The tertiary amine used for the use according to the invention preferably comprises at least one 6-membered ring. In a preferred embodiment, the tertiary amine comprises at least three tertiary amino groups and a 6-membered ring, preferably a 6-membered aromatic ring. In another embodiment the tertiary amine comprises, at least three tertiary amino groups and at least three 6-membered, preferably aromatic, rings. It is preferred that at least one tertiary amine comprising at least three tertiary amino groups and at least three 6-membered aromatic rings is crystal violet and/or derivatives thereof. Crystal violet and derivatives thereof are well known. Some suitable examples of derivatives of crystal violet compounds include, but are not limited to, Leucomalachite Green; Benzenamine, 3,3',3"-methylidynetris[N,N-dimethyl- (i.e. Leucocrystal Violet) ; Methylium, bis[4-(diethylamino)phenyl][4-(dimethylamino)phenyl]-; 4-[Bis[4-(dimethylamino)phenyl]methyl]-N-ethyl-N-phenylbenzenamine; 4,4'-[(4-Methylphenyl)imino]bis[N,N-dimethylbenzenemethanamine] ; 2,2',2"-Methylidynetris[N,N-dimethylbenzenamine] ; 4,4'-Ethylidenebis[N-methyl-N-phenylbenzenamine]; 4,4',4"-Butylidynetris[N,N-dimethylbenzenamine] ; 4-[Bis[4-(dimethylamino)phenyl]methyl]-N,N,3-trimethylbenzenamine ; 4-[Bis[4-(dimethylamino)phenyl]methyl]-N,N-diphenylbenzenamine. It is preferred that crystal violet or derivatives thereof as described herewith may be used as a mixture of two or more thereof.

In a preferred embodiment, the tertiary amine is selected from the group of the tertiary aminophenols, preferably from the group of 2,4,6-tris(di-C₁-C₆-alkylamino)phenols.

The tertiary amine is particularly preferably selected from the group consisting of 2,4,6-tris(dimethylaminomethyl)phenol (commercially available under the trade name Ancamine^{®} K54) and 1,3,5-tris[3-(dimethylamino)propyl]hexahydro-1,3,5-triazine (commercially available under the trade name Lupragen^{®} N600).

It is preferred that the reactive resin composition according to the present invention comprises at least one tertiary amine and/or at least one heterocyclic compound comprising at least one N-N single bond in the amount ranging from 0.001 to 10 weight %, preferably in the range of from 0.01 to 5 weight %, more preferably in the range of from 0.1 to 2 weight % based on the total weight of the reactive resin composition.

It is preferred that the reactive resin composition according to the present invention comprises at least one tertiary amine and/or at least one heterocyclic compound comprising at least one N-N single bond in the component (B) in the amount ranging from 0.001 to 10 weight %, preferably in the range of from 0.01 to 5 weight %, more preferably in the range of from 0.1 to 2 weight % based on the total weight of the component (B).

### Heterocyclic compound comprising at least one N-N single bond

According to the present invention the reactive resin composition comprises at least one heterocyclic compound, preferably 5 membered ring, comprising at least one N-N single bond, wherein the N-N bond is in the ring of said heterocycle. It is preferred that at least one heterocyclic compound comprising at least one N-N single bond is according to Formula (II)

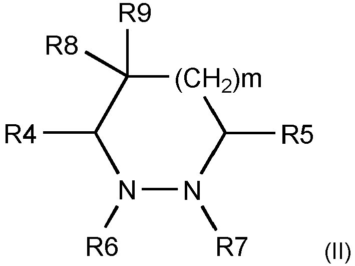

It is preferred that m is 0 or 1 or 2, more preferably m is 0. It is preferred that compound of Formula (II) is a five membered heterocyclic ring comprising N-N single bond.

It is preferred that R4, R5, R6, R7, R8, and R9 are independently from each other selected from the group comprising H, C=O, C=S, C1-C8 linear or branched, optionally substituted, saturated or unsaturated alkyl group; C1-C8 optionally substituted cycloalkyl group; optionally substituted heteroaryl group; optionally substituted up to 4 positions aryl group; optionally substituted up to 4 positions araliphatic group; and optionally substituted heteroaromatic ring (preferably 5 membered, 6 membered ring or fused heterocyclic ring system).

It is preferred that R6, R7, R8, and R9 are independently from each other selected from the group comprising H, C1-C8 linear or branched, optionally substituted, saturated or unsaturated alkyl group; C1-C8 optionally substituted cycloalkyl group; optionally substituted heteroaryl group; optionally substituted up to 4 positions aryl group; optionally substituted up to 4 positions araliphatic group; and optionally substituted heteroaromatic ring (preferably 5 membered, 6 membered ring or fused heterocyclic ring system).

In another embodiment it is preferred that R4 and/or R5 is carbonyl group, such that R4 and/or R5 is an oxygen having a double bond with the ring of Formula (II). In another embodiment it is preferred that R4 and/or R5 is a sulfur atom.

It is preferred that R6, R7, R8, and R9 are independently from each other selected from the group comprising H, C1-C4 alkyl group (preferably methyl, ethyl, n-propyl, iso-propyl, n-butyl, iso-butyl, and tert-butyl), C1-C4 alkoxy group (preferably ethoxy, isopropoxy, tert-butoxy), optionally substituted up to 4 positions aryl group (preferably phenyl, phenol, tolyl, xylyl, benzaldehyde, tert-butylbenzene), optionally substituted coumarin ring; and - C1-C4alkyl(SO)aryl. It is preferred that R6, R7 and R8 are independently from each other selected from H, methyl, ethyl, n-propyl, iso-propyl, n-butyl, iso-butyl, ethoxy, isopropoxy, phenyl, hydroxy phenyl, tolyl, xylyl, benyaldehyde, tert-butylbenzene, -ethyl(SO)phenyl.

It is preferred that R6 and R7, independently from each other, are H, methyl, ethyl, butyl, or optionally substituted aryl group, preferably optionally substituted phenyl group. It is preferred that an aryl group is selected from the group comprising phenyl, phenol, benzyl phenol, phenyl sulfonamide, tolyl, xylyl, tert-butylbenzene, more preferably phenyl. In another embodiment it is preferred that R6 and R7 are the same. In another embodiment is preferred that R6 and R7 are different. It is most preferred that both R6 and R7 are both phenyl.

In another embodiment R6 and R7 are hydrocarbon fused together to form a C3-C12, preferably C5-C7, fused to compound of Formula (II) heterocycle. Said heterocycle formed between R6 and R7 may be substituted with a hetero atom, preferably a sulfur, oxygen or nitrogen atom. The heterocycle may comprise other heteroatoms in the ring. The heterocycle may be saturated or unsaturated.

It is preferred that R8 and R9 are independently from each other selected from the group comprising H, methyl, ethyl, n-propyl, iso-propyl, n-butyl, iso-butyl, and tert-butyl, ethoxy, C1-4 allyl, C1-C4 thioether, C1-C4 ether, C1-C4 alkyl ketone, isopropoxy, tert-butoxy, phenyl, tetrahydrofuran, unsaturated hydroxy benzyl, nitrile, phenol, tolyl, xylyl, benzaldehyde, tert-butylbenzene, optionally substituted coumarin ring, -C1-C4alkyl(SO)aryl, preferably -ethyl(SO)phenyl.

It is preferred that the compound of Formula (II) is selected from the group comprising 1,2-diphenyl-3,5-pyrazolidinedione, 4-butyl-1,2-diphenyl-3,5-pyrazolidinedione (phenylbutazone), 1,2-diphenyl-4-propyl-3,5-pyrazolidinedione, 4-(1-methylethyl)-1,2-diphenyl-3,5-pyrazolidinedione, 1,2-diethyl-3,5-pyrazolidinedione, 1,2-dimethyl-4-(3-oxobutyl)-1,2-diphenyl-3,5-pyrazolidinedione(ketophenylbutazone), 4-butyl-1,2-dimethyl-3,5-pyrazolidinedione, 4-(3-hydroxybutyl)-1,2-diphenyl-3,5-pyrazolidinedione (a-hydroxyphenylbutazone), 4-butyl-1-(4-hydroxyphenyl)-2-phenyl-3,5-pyrazolidinedione (oxyphenbutazone), 1-(4-(benzyloxy)phenyl)-4-butyl-2-phenyl-3,5-pyrazolidinedione (4'-O-benzyloxyphenbutazone), 1,2-diphenyl-4-[2-(phenylsulfinyl)ethyl]-3,5-pyrazolidinedione (sulfinpyrazone), 4-(2-aminoethyl)-1,2-diphenyl-3,5-pyrazolidinedione, 4-(3-methyl-2-butenyl)-1,2-diphenyl-3,5-pyrazolidinedione (feprazone), 4-(4,4-dimethyl-3-oxophenyl)-1,2-diphenyl-3,5-pyrazolidinedione (tribuzone), 4,4'-(4-butyl-3,5-dioxopyrazolidine-1,2-diyl)dibenzenesulfonamide (butacuglionamide), 4-[2-(methylthio)ethyl]-1,2-diphenyl-3,5-pyrazolidinedione, 1,2-dimethyl-3,5-pyrazolidine-4-carbonitrile, 2-[(2-tetrahydrofuranyl)methyl]-1H-benzo[c]pyrazolo[1,2-a]cinnoline-1,3(2H)-dione (cinnofuradione) and 1,1',2,2'-tetraphenyl-(4,4'-bipyrazolidine)-3,3',5,5'-tetrone and the like; and examples of the pyrazolidine(di)thione compound include 1,2-diphenyl-3,5-pyrazolidinedione, 4-butyl-1,2-diphenyl-3,5-pyrazolidinedithione, 1,4-diphenyl-3,5-pyrazolidinedione, 4-(2-hydroxybenzylidene)-1,2-diphenyl-3,5-pyrazolidinedione, 4-allyl-4-phenyl-3,5-pyrazolidinedione, 4,4-diethyl-1-phenyl-3,5- pyrazolidinedione, 4-(2-oxopropyl)-1,2-diphenyl-3,5-pyrazolidinedione, and combinations of two or more thereof, more preferably selected from a group comprising 1,2-diphenyl-3,5-pyrazolidinedione, 4-butyl-1,2-diphenyl-3,5-pyrazolidinedione (phenylbutazone), 1,2-diphenyl-4-[2-(phenylsulfinyl)ethyl]-3,5-pyrazolidinedione (sulfinpyrazone), 4-[2-(methylthio)ethyl]-1,2-diphenyl-3,5-pyrazolidinedione, 4-(2-hydroxybenzylidene)-1,2-diphenyl-3,5-pyrazolidinedione, 4-allyl-4-phenyl-3,5-pyrazolidinedione, 4,4-diethyl-1-phenyl-3,5-pyrazolidinedione, 4-(2-oxopropyl)-1,2-diphenyl-3,5-pyrazolidinedione and combinations of two or more thereof.

It is preferred that the compound of Formula (II) is selected from the group comprising 1,2-diphenyl-3,5-pyrazolidinedione, 1,2-diphenyl-4-[2-(phenylsulfinyl)ethyl]-3,5-pyrazolidinedione (sulfinpyrazone), 4,4-diethyl-1-phenyl-3,5- pyrazolidinedione, 4-(2-oxopropyl)-1,2-diphenyl-3,5-pyrazolidinedione, and combinations of two or more thereof.

It is preferred that the compound of Formula (II) is phenylbutazone and/or sulfinpyrazone.

It is preferred that the reactive resin composition according to the present invention comprises at least one heterocyclic compound comprising at least one N-N single bond in the amount ranging from 0.001 to 10 weight %, preferably in the range of from 0.01 to 5 weight %, more preferably in the range of from 0.1 to 2 weight % based on the total weight of the reactive resin composition.

It is preferred that the reactive resin composition according to the present invention comprises at least one heterocyclic compound comprising at least one N-N single bond in the component (B) in the amount ranging from 0.001 to 10 weight %, preferably in the range of from 0.01 to 5 weight %, more preferably in the range of from 0.1 to 2 weight % based on the total weight of the component (B).

### Radically polymerizable compound

The methacrylate comprising compound is a radically polymerizable compound and is used as a reactive resin. Suitable radically polymerizable compounds that can be used both as a reactive resin and as a reactive diluent are those that are usually described for reactive resin compositions to be used for chemical fastening. According to the present invention methacrylate comprising compound is used as the at least one radically polymerizable compound. This has been found to be advantageous because the steric hindrance of acrylates leads to improved alkali stability.

Even though not according to the present invention, a person skilled in the art understands that reactive resins based on acrylates would also work with the peroxide-free initiator system according to the present invention. Thus, a reactive resin composition according to the present invention may also further comprise at least one acrylate comprising compound, wherein at least one acrylate comprising compound is a reactive resin and/or a reactive diluent.

It is preferred that the methacrylate comprising compound is selected from the group consisting of compounds comprising urethane(meth)acrylate, compounds comprising epoxy(meth)acrylate, alkoxylated bisphenols comprising methacrylate(s), methacrylate comprising compounds based on further ethylenically unsaturated compounds and combinations of two or more thereof.

Methacrylate comprising compounds can be obtained, for example, by reacting di- and/or higher-functional isocyanates with suitable methacrylic compounds, in some cases with the help of hydroxy compounds that contain at least two hydroxyl groups, as described for example in DE 3940309 A1. Very particularly suitable and preferred are the urethane methacrylate resins (which are also referred to as vinyl ester urethane resins) described in DE 102011017 626 B4.

Aliphatic (cyclic or linear) and/or aromatic di- or higher-functional isocyanates or prepolymers thereof can be used as isocyanates. The use of such compounds increases wettability and thus improves the adhesive properties. Aromatic di- or higher-functional isocyanates or prepolymers thereof are preferred, with aromatic di- or higher-functional prepolymers being particularly preferred. Toluylene diisocyanate (TDI), diisocyanatodiphenylmethane (MDI) and polymeric diisocyanatodiphenylmethane (pMDI) for increasing chain stiffening, and hexane diisocyanate (HDI) and isophorone diisocyanate (IPDI), which improve flexibility, may be mentioned by way of example, of which polymeric diisocyanatodiphenylmethane (pMDI) is very particularly preferred.

It is also possible to use acrylic compounds in the reactive resin composition according to the present invention. Suitable acrylic compounds are acrylic acid and acrylic acids substituted on the hydrocarbon group, such as methacrylic acid, hydroxyl-group-containing esters of acrylic or methacrylic acid with polyhydric alcohols, pentaerythritol tri(meth)acrylate, glycerol di(meth)acrylate, such as trimethylolpropane di(meth)acrylate and neopentyl glycol mono(meth)acrylate. Acrylic or methacrylic acid hydroxyalkyl esters, such as hydroxyethyl(meth)acrylate, hydroxypropyl(meth)acrylate, polyoxyethylene(meth)acrylate, polyoxypropylene(meth)-acrylate.

Also suitable are compounds which are based at least in part on a recycled compound, in particular of (meth)acrylic esters. Particular preference is given to a (meth) acrylic ester which is obtained from recycled methyl(meth)acrylate. Suitable compounds include hydroxyl-group-containing esters of acrylic or methacrylic acid with polyhydric alcohols, pentaerythritol tri(meth)acrylate, glycerol di(meth)acrylate, such as trimethylolpropane di(meth)acrylate, and neopentyl glycol mono(meth)acrylate, preferably acrylic or methacrylic acid hydroxyalkyl esters, such as hydroxyethyl(meth)acrylate, hydroxypropyl(meth)acrylate, polyoxyethylene(meth)acrylate and polyoxypropylene(meth)acrylate, each of which can be obtained from recycled methyl(meth)acrylate.

Hydroxy compounds that can optionally be used are suitable dihydric or higher alcohols, for example secondary products of ethylene oxide or propylene oxide, such as ethanediol, di- or triethylene glycol, propanediol, dipropylene glycol, other diols, such as 1,4-butanediol, 1,6-hexanediol, neopentyl glycol, diethanolamine, further bisphenol A or F or their ethoxylation/propoxylation and/or hydrogenation or halogenation products, higher alcohols, such as glycerol, trimethylolpropane, hexanetriol and pentaerythritol, hydroxyl-group-containing polyethers, for example oligomers of aliphatic or aromatic oxiranes and/or higher cyclic ethers, such as ethylene oxide, propylene oxide, styrene oxide and furan, polyethers which contain aromatic structural units in the main chain, such as those of bisphenol A or F, hydroxyl-group-containing polyesters based on the above-mentioned alcohols or polyethers and dicarboxylic acids or their anhydrides, such as adipic acid, phthalic acid, tetra- or hexahydrophthalic acid, HET acid, maleic acid, fumaric acid, itaconic acid, sebacic acid and the like. Particularly preferred are hydroxy compounds having aromatic structural units to reinforce the chain of the resin, hydroxy compounds containing unsaturated structural units, such as fumaric acid, to increase the crosslinking density, branched or star-shaped hydroxy compounds, in particular trihydric or higher valence alcohols and/or polyethers or polyesters containing the structural units thereof, branched or star-shaped urethane (meth)acrylates to achieve lower viscosity of the resins or the solutions thereof in reactive diluents and higher reactivity and crosslinking density.

The vinyl ester resin preferably has a molecular weight Mn in the range from 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

In the context of the invention, vinyl ester resins are oligomers, prepolymers or polymers having at least one (meth)acrylate end group, what are referred to as (meth)acrylate-functionalized resins, which also include urethane (meth)acrylate resins and epoxy (meth)acrylates. Preferred vinyl ester resins are (meth)acrylate-functionalized resins and resins which are obtained by reacting an epoxy oligomer or epoxy polymer with methacrylic acid or methacrylamide, preferably with methacrylic acid, and in some cases with a chain extender, such as diethylene glycol or dipropylene glycol. Examples of compounds of this kind are known from the applications US 3297745 A, US 3772404 A, US 4618658 A, GB 2217722 A1, DE 3744390 A1 and DE 4131457 A1.

The epoxy(meth)acrylate resins are obtained by reacting an organic compound having epoxide groups with acrylic acid or methacrylic acid, so that the resins necessarily have acryloxy groups or methyloxy groups at the molecular ends and hydroxyl groups in the 2 position for the formed acryloxy or methacryloxy group (also referred to below as α hydroxyl groups) in the main chain of the molecule. It is expedient to use 0.7 to 1.2 carboxyl equivalents of (meth)acrylic acid per epoxide equivalent. The organic compounds comprising epoxide groups and the (meth)acrylic acid are preferably used in approximately stoichiometric ratios, i.e., an equivalent (meth)acrylic acid is used per epoxide equivalent of the organic compound, for example. The reaction is carried out in the presence of suitable catalysts known to those skilled in the art, such as quaternary ammonium salts.

Advantageously, organic compounds having epoxide groups are used with a molecular weight having a number average molecular weight *M̅ₙ* in the range from 129 to 2,400 g/mol and which include at least one, preferably 1.5 to 2 epoxy groups per molecule in the average. The epoxy groups are particularly preferably of the glycidyl ether or glycidyl ester type obtained by reacting an epihalohydrin, in particular epichlorohydrin, with a mono- or polyfunctional aliphatic or aromatic hydroxy compounds, thiol compounds or carboxylic acids or a mixture thereof. The organic compound comprising obtained epoxide groups has an epoxy equivalent mass (EEW) preferably in the range from 87 to 1600 g/val, more preferably in the range from 160 to 800 g/val and most preferably in the range from 300 to 600 g/val.

Examples of suitable compounds having epoxide groups are polyglycidyl ethers of polyhydric phenols, for example pyrocatechol, resorcinol, hydroquinone, 4,4'-dihydroxydiphenylmethane, 2,2- (4,4'-dihydroxydiphenyl) propane (bisphenol A), bis(4-hydroxyphenyl) methane (bisphenol F), 4,4`-dihydroxydiphenyl sulfone (bisphenol S), 4,4`-dihydroxydiphenyl cyclohexane, tris (4-hydroxyphenyl)-methane, novolacs (i.e., from reaction products of mono- or polyhydric phenols with aldehydes, in particular formaldehyde, in the presence of acidic catalysts), such as phenol novolac resin, cresol novolac resin.

Furthermore, the following can be mentioned as non-limiting examples: Glycidyl ethers of monoalcohols, for example n-butanol or 2-ethylhexanol; or glycidyl ethers of polyhydric alcohols, for example of 1,3-butanediol, 1,4-butanediol, 1,6-hexanediol, glycerol, benzyl alcohol, neopentyl glycol, ethylene glycol, cyclohexanedimethanol, trimethylolpropane, pentaerythritol and polyethylene glycols, triglycidyl isocyanurate; polyglycidyl thioether of polyvalent thiols, such as bismercaptomethylbenzene; or glycidyl esters of monocarboxylic acids, such as versatic acid; or glycidyl esters of polyvalent, aromatic and aliphatic carboxylic acids, for example phthalic acid diglycidyl esters, isophthalic acid diglycidyl esters, terephthalic acid diglycidyl esters, tetrayhydrophthalic acid diglycidyl esters, adipinic acid diglycidyl esters, and hexahydrophthalic acid diglycidyl esters.

Particularly preferred organic compounds comprising epoxide groups are diglycidyl ethers of divalent hydroxy compounds of the general formula (VI) 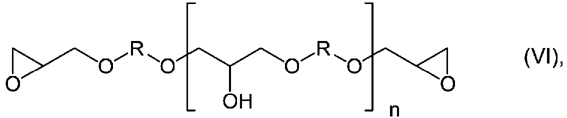 in which R is an unsubstituted or substituted aliphatic or aromatic group, preferably an aromatic group, more preferably an aromatic group having 6 to 24 carbon atoms, and the average value for n is 0 to 3. R is particularly preferably a group of the bisphenol type, such as bisphenol A, bisphenol F or bisphenol S, or of the novolac type, wherein a group of the bisphenol type is very particularly preferred. The average value for n is preferably about 0.1, about 1 or about 2. Within the meaning of the present invention, compounds in which n ~ 0.1 are referred to as monomers, and compounds in which n ~ 1 or 2 are referred to as polymers.

The polymeric compounds have the advantage over the monomeric compounds that the reactive resin content in the reactive resin composition can be significantly reduced, which makes the reactive resin composition more economical in production, because the production costs can thereby be reduced.

Within the meaning of the invention, vinyl ester resins are oligomers or polymers having at least one (meth)acrylate end group, what are referred to as (meth)acrylate-functionalized resins, which also include primarily epoxy(meth)acrylates.

Vinyl ester resins, which have unsaturated groups only in the end position, are obtained, for example, by reacting epoxy oligomers or polymers (for example bisphenol A digylcidyl ether, phenol novolac-type epoxies or epoxy oligomers based on tetrabromobisphenol A) with (meth)acrylic acid or (meth)acrylamide, for example. Preferred vinyl ester resins are (meth)acrylate-functionalized resins and resins which are obtained by reacting epoxy oligomers or epoxy polymers with methacrylic acid or methacrylamide, preferably with methacrylic acid. Examples of compounds of this kind are known from the applications US 3297745 A, US 3772404 A, US 4618658 A, GB 2217722 A1, DE 3744390 A1 and DE 4131457 A1. In this context, reference is made to the application US 2011/071234.

The vinyl ester resin preferably has a molecular weight Mn in the range of 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

Ethoxylated bisphenol A di(meth)acrylate having a degree of ethoxylation of 2 to 10, preferably of 2 to 4, difunctional, trifunctional or higher functional urethane (meth)acrylate oligomers, or mixtures of these polymerizable constituents are particularly suitable as the vinyl ester resin.

Examples of epoxy(meth)acrylates of this kind are those of formula (V) 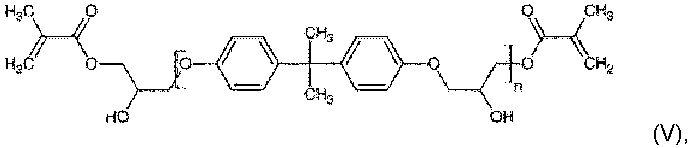 wherein n represents a number greater than or equal to 1 (if mixtures of different molecules are present with different n values and are represented by formula (V), non integers are also possible as an average).

Further examples of the propoxylated or in particular ethoxylated aromatic diol, such as bisphenol A, bisphenol F or novolac (in particular di-)(meth)acrylates, are those of formula (VII) 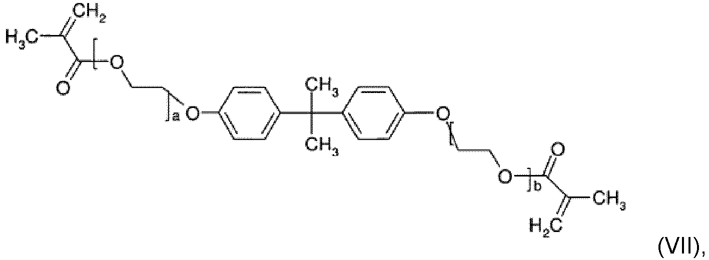 wherein a and b each independently represent a number greater than or equal to 0 with the proviso that preferably at least one of the values is greater than 0, preferably both 1 or greater (if mixtures of different molecules having different (a and b) values are present and are represented by the formula (VII), non-integer numbers are also possible as the average value).

The known reaction products of di- or polyisocyanates and hydroxyalkylmethylacrylates, as described, for example, in DE 2312559 A1, adducts of (di)isocyanates and 2,2-propane bis[3-(4-phenoxy)-1,2-hydroxypropane-1-methacrylate] according to US-PS 3 629 187, and the adducts of isocyanates and methacryloyl alkyl ethers, alkoxybenzenes or alkoxycycloalkanes, as described in EP 44352 A1, are very particularly suitable. In this context, reference is made to DE 2312559 A1, DE 19902685 A1, EP 0684906 A1, DE 4111828 A1 and DE 19961342 A1. Of course, mixtures of suitable monomers can also be used.

All of these resins that can preferably be used according to the invention can be modified according to methods known to a person skilled in the art, for example to achieve lower acid numbers, hydroxide numbers or anhydride numbers, or can be made more flexible by introducing flexible units into the backbone, and the like.

In addition, the reactive resin may contain other reactive groups that can be polymerized with a radical initiator, such as peroxides, for example reactive groups derived from itaconic acid, citraconic acid and allylic groups and the like, as described, for example, in WO 2010/108939 A1 (itaconic acid ester).

### Reactive diluents

It is preferred that the reactive resin composition further comprises at least one reactive diluent. Suitable reactive diluents are described in the applications EP 1 935 860 A1 and DE 195 31 649 A1. It is preferred that the at least one reactive diluent is a (meth)acrylic acid ester, more preferably aliphatic or aromatic C5-C15-(meth)acrylates. Suitable examples comprise: 2-, 3-hydroxypropyl(meth)acrylate (HP(M)A), 1,3-propanediol di(meth)acrylate, 1,3-butanediol di(meth)acrylate, 1,4-butanediol di(meth)acrylate, trimethylolpropane tri(meth)acrylate, phenethyl (meth)acrylate, tetrahydrofurfuryl (meth)acrylate, N,N-dimethylaminoethyl (meth)acrylate, N,N-dimethylaminomethyl (meth)acrylate, acetoacetoxyethyl (meth)acrylate, isobornyl (meth)acrylate, 2-ethylhexyl (meth)acrylate, methoxypolyethylene glycol mono(meth)acrylate, trimethylcyclohexyl (meth)acrylate, 2-hydroxyethyl (meth)acrylate, dicyclopentenyloxyethyl (meth)acrylate and/or tricyclopentadienyl di(meth)acrylate, bisphenol A (meth)acrylate, novolac epoxy di(meth)acrylate, di-[(meth)acryloyl-maleoyl]-tricyclo-5.2.1.0.2.6-decane, dicyclopentenyloxyethylcrotonate, 3-(meth)acryloyl-oxymethyl-tricylo-5.2.1.0.2.6-decane, 3-(meth)cyclopentadienyl (meth)acrylate, and decalyl-2-(meth)acrylate; glycerol formal(meth)acrylate; solketal (meth)acrylate, cyclohexyl (meth)acrylate, phenoxyethyl di(meth)acrylate, methoxyethyl (meth)acrylate, tert-butyl (meth)acrylate and norbornyl (meth)acrylate. Methacrylates are preferred over acrylates. It is preferred that at least one reactive diluent is selected from a group comprising 2- and 3-hydroxypropyl methacrylate (HPMA), 1,2-ethanediol dimethacrylate, 1,4-butanediol dimethacrylate (BDDMA), 1,3-butanediol dimethacrylate, trimethylolpropane trimethacrylate, acetoacetoxyethyl methacrylate, isobornyl methacrylate, bisphenol A methacrylate, trimethylcyclohexyl methacrylate, 2-hydroxyethyl methacrylate, PEG200 or PEG400 dimethacrylate, norbornyl methacrylate and combinations of two or more thereof, more preferably selected from a group consisting of 1,4-butanediol dimethacrylate, a mixture of 2- and 3-hydroxypropyl methacrylate (HPMA), or a mixture of these three methacrylates. It is preferred that the reactive resin composition comprises a mixture of 2- and 3-hydroxypropyl methacrylate (HPMA). In principle, other conventional radically polymerizable compounds, alone or in a mixture with the (meth)acrylic acid esters, can also be used as reactive diluents, e.g., styrene, α-methylstyrene, alkylated styrenes, such as tert-butylstyrene, divinylbenzene and vinyl and allyl compounds, of which the representatives that are not subject to mandatory labeling are preferred. Examples of vinyl or allyl compounds of this kind are hydroxybutyl vinyl ether, ethylene glycol divinyl ether, 1,4-butanediol divinyl ether, trimethylolpropane divinyl ether, trimethylolpropane trivinyl ether, mono-, di-, tri-, tetra- and polyalkylene glycol vinyl ether, mono-, di-, tri-, tetra- and polyalkylene glycol allyl ether, adipic acid divinyl ester, trimethylolpropane diallyl ether and trimethylolpropane triallyl ether.

It is preferred that the amount of the at least one reactive diluent in the reactive resin composition is in the range of from 10 to 80 weight % based on the total weight of the reactive resin composition. It is preferred that the at least one reactive diluent is present in component (A) and/or component (B), it is preferred that at least one reactive diluent is present in both component (A) and component (B).

### Inhibitor

It is preferred that the reactive resin composition comprises at least one inhibitor. At least one inhibitor can be used for stabilizing the reactive resin or the reactive resin composition containing the reactive resin, and for adjusting the resin reactivity.

Suitable inhibitors for radically polymerizable compounds are known to a person skilled in the art. It is preferred that the at least one inhibitor is selected from non-phenolic inhibitors, in particular phenothiazines.

Phenothiazines such as phenothiazine and/or derivatives or combinations thereof, or stable organic radicals such as galvinoxyl and N-oxyl radicals, in particular of the piperidinyl-N-oxyl or tetrahydropyrrole-N-oxyl type, are preferably considered as non-phenolic inhibitors, such as aluminum-N-nitrosophenylhydroxylamine, diethylhydroxylamine, oximes such as acetaldoxime, acetone oxime, methyl ethyl ketoxime, salicyloxime, benzoxime, glyoximes, dimethylglyoxime, acetone-O-(benzyloxycarbonyl)oxime, 4-hydroxy-TEMPO, (TEMPOL), 4-acetyl-TEMPO, TEMPO and the like.

Furthermore, pyrimidinol or pyridinol compounds substituted in para-position to the hydroxyl group, as described in DE 10 2011 077 248 B1, can be used as inhibitors.

Examples of stable N-oxyl radicals which can be used are those described in DE 199 56 509 A1 and DE 195 31 649 A1. Stable nitroxyl radicals of this kind are of the piperidinyl-N-oxyl or tetrahydropyrrole-N-oxyl type or a mixture thereof.

Preferred stable nitroxyl radicals are selected from the group consisting of 1-oxyl-2,2,6,6-tetramethylpiperidine, 1-oxyl-2,2,6,6-tetramethylpiperidin-4-ol (also referred to as TEMPOL), 1-oxyl-2,2,6,6-tetramethylpiperidin-4-one (also referred to as TEMPON), 1-oxyl-2,2,6,6-tetramethyl-4-carboxyl-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also referred to as 3-carboxy-PROXYL) and mixtures of two or more of these compounds, with 1-oxyl-2,2,6,6-tetramethylpiperidin-4-ol (TEMPOL) being particularly preferred.

It is preferred that the at least one inhibitor is selected from the group consisting of N-oxyl radicals, catechols, catechol derivatives and phenothiazines and a mixture of two or more thereof. The at least one inhibitor selected from the group consisting of Tempol, catechols, phenothiazines and combinations of two or more thereof is particularly preferred. The inhibitors used in the examples are very particularly preferred, preferably approximately in the amounts stated in the examples.

The at least one inhibitor can be used either alone or as a combination of two or more thereof, depending on the desired properties of the reactive resin. The combination of phenolic and non-phenolic inhibitors is preferred.

The inhibitor or inhibitor mixture is added - or is already contained in the raw materials used - in conventional amounts known in the art, preferably in an amount of approximately 0.0005 to approximately 2 weight %, more preferably from approximately 0.001 to approximately 1 weight %, even more preferably from approximately 0.005 to approximately 0.5 weight % based on the reactive resin/at least one radically polymerizable compound according to the present invention.

It is preferred that at least one inhibitor is present in component (A) and/or component (B).

### Filler

It is preferred that the reactive resin composition according to the present invention further comprises at least one filler. It is preferred that component (A) and/or component (B) comprises at least one filler. The at least one filler can be any customary filler used for chemical fastening. It should be noted that some substances can be used both as a filler and, optionally in modified form, as an additive. For example, fumed silica is preferably used as a filler in its polar, non-after-treated form, and is preferably used as an additive in its non-polar, after-treated form. In cases in which exactly the same substance can be used as a filler or an additive, its total amount should not exceed the upper limit for fillers that is determined herein.

To formulate the reactive resin composition according to the invention, conventional fillers may be used, preferably mineral or mineral-like fillers, such as quartz, glass, sand, quartz sand, quartz powder, porcelain, corundum, ceramics, talc, silica (e.g., fumed silica, in particular polar, non-after-treated fumed silica), silicates, aluminum oxides (e.g., alumina), clay, titanium dioxide, chalk, barite, feldspar, basalt, aluminum hydroxide, granite or sandstone, polymeric fillers such as thermosets, hydraulically curable fillers such as gypsum, quicklime or cement (e.g., aluminate cement (often referred to as alumina cement) or Portland cement), metals such as aluminum, carbon black, and also wood, mineral or organic fibers, or the like, or mixtures of two or more thereof. The fillers may be present in any desired shapes, for example as powder, or as shaped bodies, e.g., having a cylindrical, annular, spherical, platelet, rod, saddle or crystal shapes, or else shaped like fiber (fibrillar fillers), and the corresponding base particles preferably have a maximum diameter of approximately 10 mm and a minimum diameter of approximately 1 nm. This means that the diameter is approximately 10 mm or any value less than approximately 10 mm, but more than approximately 1 nm. The maximum diameter is preferably a diameter of approximately 5 mm, more preferably approximately 3 mm, even more preferably approximately 0.7 mm. A maximum diameter of approximately 0.5 mm is very particularly preferred. The more preferred minimum diameter is approximately 10 nm, even more preferably approximately 50 nm, very particularly preferably approximately 100 nm. Diameter ranges resulting from a combination of this maximum diameter and minimum diameter are particularly preferred. However, the globular, inert substances (spherical shape) have a preferred and more pronounced reinforcing effect. Core-shell particles, preferably having a spherical shape, can also be used as fillers.

Preferred fillers are selected from the group consisting of cement, silica, quartz, quartz sand, quartz powder, and mixtures of two or more thereof. For the purpose of chemical fastening, fillers selected from the group consisting of cement, fumed silica, in particular untreated, polar fumed silica, quartz sand, quartz powder, and mixtures of two or more thereof are particularly preferred.

Also suitable is the use of at least one powdered recycling material according to the previously unpublished European patent application EP 21 207137.7 (filing date 11/09/2021) as a filler.

Suitable fillers may be selected from barite powders, preferably high-density barite powders. It is preferred that barite powders are selected from the group consisting of barium sulfate (type 1 and/or 2), Albawhite 10, Albawhite 40, Albawhite 60, Albawhite 70, Albawhite 80, Albawhite 90, Albawhite 100, Albawhite 110, Barytmehl N, Barytmehl G, Schwerspat C10, Schwerspat C14, Barytsand 710, and combinations of two or more thereof.

Particularly suitable fillers are quartz powders, fine quartz powders and ultra-fine quartz powders that have not been surface-treated, such as Millisil^{®} W3, Millisil^{®} W6, Millisil^{®} W8 and Millisil^{®} W12, preferably Millisil^{®} W12. Silanized quartz powders, fine quartz powders and ultra-fine quartz powders can also be used. These are commercially available, for example, from the Silbond^{®} product series from Quarzwerke. The product series Silbond^{®} EST (modified with epoxysilane), Silbond^{®} MST (modified with methacrylsilane) and Silbond^{®} AST (treated with aminosilane) are particularly preferred. Furthermore, it is possible to use conventional filler based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

It is preferred that the high-density fillers, such as barite powders as disclosed herewith, are comprised in the component (A) and/or component (B).

The conventional filler may optionally be modified. For example, the filler may be modified, i.e., surface modified, with an adhesion promoter as described below.

The particle size of the conventional filler is not especially important according to the present invention. For example, the conventional filler may have a median particle size d50 of 100 µm or less, or 50 µm or less, such as 20 µm or less.

It is preferred that component (A) comprises at least one filler according to any one of the embodiments as disclosed herewith in the amount of from 20 to 90 wt.-% based on the total weight of at least one component (A), preferably in the range of from 30 to 70 wt.-%, more preferably in the range of from 45 to 60 wt.-%, more preferably in the range of from 50 to 65 wt.-%.

It is preferred that at least one component (B) comprises at least one filler according to any one of the embodiments as disclosed herewith in the amount of from 10 to 80 wt.-% based on total the weight of at least one component (B), preferably in the range of from 15 to 50 wt.-%, more preferably in the range of from 25 to 35 wt.-%.

### Functional Filler

In addition to the at least one filler as outlined above, it is preferred that the reactive resin composition according to the present invention further comprises at least one functional filler. It is preferred that at least one functional filler is at least one zeolite.

The functional filler can be introduced by being present in the component (A) and/or in the component (B).

Preferably, the functional filler is a hygroscopic inorganic compound which acts as a desiccant. It is preferred that the functional filler is a molecular sieve and/or a zeolite. The hydroscopic and desiccant properties of the functional filler according to any one of the embodiments as disclosed herewith serves to increase the storage stability of the component (A), and thus of the multi-component resin system of the present invention.

It is preferred that the zeolites used in the present invention are synthetic or natural zeolites and are generally characterized by the composition M^{n+x}_{/n} [(AlO2)⁻ₓ(SiO2)_{y}]·zH2O wherein N is the charge of M, usually 1 or 2, and M is a cation of an alkali or alkaline earth metal, in particular Na+, K+, Ca2+ and Mg2+.

The following can be used as zeolites:
Zeolith A (₁₂(AlO2)₁₂(SiO2)₁₂ · 27 H2O; K12((AlO2)₁₂(SiO2)₁₂) · 27 h2O),
Zeolith X (Na₈₆[(AlO2)₈₆(SiO2)₁₀₆] · 264 H2O),
Zeolith Y (Na₅₆[(AlO2)₅₆(SiO2)₁₃₆] · 250 H2O),
Zeolith L (k₉[(AlO2)₉(SiO2)₂₇] · 22 H2O),
Modernit (Na_{8,7}[(AlO2)_{8,7}(SiO2)_{39,3}] · 24 H2O),
Zeolith ZSM 5 (Na_{0,3H3,8}[(AlO2)_{4,1}(SiO2)_{91,9}]),
Zeolite ZSM 11 (Na_{0,1H1},₇[(AlO2)_{1,8}(SiO2)_{94,2}]). Of these, zeolite A, zeolite X, zeolite Y and
zeolite ZSM 5 and zeolite ZSM 11 are preferred.

The molecular sieve, especially the zeolite, can be used as a powder, granule or as a paste (e.g. 48-50% powder dispersed in castor oil).

The synthetic zeolite is preferably a synthetic zeolite comprising particles with a particle size of up to 250 µm, especially 5 µm to 24 µm. Synthetic zeolite has a pore size of about 5 Å to about 10 Å, especially about 3 Å to about 4 Å.

The specific surface area (BET) of the zeolite particles preferentially lies between 800 m²/g and 1000 m2/g.

The residual water content of the zeolite is below 2.5% w/w, preferably below 1.5% w/w, and the water absorption capacity is below 22 - 24% w/w.

It is possible to use a mixture of two or more different types of zeolite.

The molecular sieve, especially the zeolite, is preferably used in component (A) in an amount of 1 to 35 weight %, preferably 2 wt.-% to 15 wt.-% and especially preferably in a quantity of 1.5 to 5 weight % based on the total weight of the component (A).

It is preferred that the functional filler as described above is dried before its use and/or addition to the component (A).

It is particularly preferred that the functional filler is a synthetic zeolite, preferably an alkali aluminosilicate zeolite (e.g. Purmol^{®} 3ST). The functional filler according to any of the embodiments as disclosed herewith has the function of absorbing water, which aids in improving storage stability of component (A) and thus of the multi-component reactive resin system according to the present invention.

It is preferred that the functional filler is a hygroscopic, basic, inorganic compound. Even more preferably, the functional filler is a mineral, preferably a mineral derived from calcium, aluminum, or magnesium.

Preferably, the functional filler is selected from the list consisting of a calcium salt and a silicate. The calcium salt is selected from the list consisting of calcium oxide, calcium chloride, and calcium sulfate. More preferably, the functional filler is a silicate. Preferred silicates are aluminum silicates, magnesium silicates, and mixtures thereof. Aluminum silicates are preferably selected from the list consisting of hydrous aluminum phyllosilicates, preferably clay, most preferably clay brick powder, aluminosilicate, preferably zeolite. and Even more preferred are magnesium silicates, preferably hydrated magnesium silicates. It is preferred that the functional filler is a hydrated magnesium silicate, preferably selected from sepiolite and montmorillonite.

It is preferred that the amount of at least one filler, preferably at least one functional filler and at least one conventional filler according to any one of the embodiments as disclosed herewith, and at least one rheology additive is in the range of from 30 to 90 weight % based on total weight of component (A), more preferably in the range of from 40 to 80 weight %, more preferably in the range of from 50 to 70 weight %, and more preferably in the range of from 53 to 68 weight %.

It is preferred that the amount of at least one filler, preferably at least one functional filler and at least one conventional filler according to any one of the embodiments as disclosed herewith, and at least one rheology additive in component (B) is in the range of from 10 to 80 wt.-% based on total weight of component (B), preferably in the range of from 30 to 70 wt.-%, more preferably in the range of from 45 to 60 wt.-%.

### Rheology additive

It is preferred that the reactive resin composition comprises at least one rheology additive.

Further possible additives are also rheology additives, such as optionally organically or inorganically after-treated fumed silica (if not already used as a filler), in particular fumed silica after-treated in a non-polar manner, bentonites, alkyl- and methylcelluloses, castor oil derivatives or the like, plasticizers, such as phthalic or sebacic acid esters, stabilizers, antistatic agents, thickening agents, flexibilizers, hardening catalysts, rheological aids, wetting agents, coloring additives, such as dyes or in particular pigments, for example for different staining of the components for improved control of the mixing thereof, or the like, or mixtures of two or more thereof. Agents for regulating pH, such as inorganic and/or organic acids according to DE 102010008971 A1, in particular copolymers having acidic groups, e.g., esters of phosphoric acid, can also be used. Non-reactive diluents (solvents) such as lower-alkyl ketones, e.g., acetone, di-lower-alkyl lower-alkanoyl amides such as dimethylacetamide, lower-alkylbenzenes such as xylenes or toluene, phthalic acid esters or paraffins, or water, or glycols can also be present, preferably in an amount of up to 30 weight %, based on the relevant component (reactive resin mortar, hardener), for example from 1 to 20 weight %. Furthermore, agents for improving the compatibility between the resin component and the hardener component can also be used, such as ionic, nonionic or amphoteric surfactants; soaps, wetting agents, detergents; polyalkylene glycol ethers; salts of fatty acids, mono- or diglycerides of fatty acids, sugar glycerides, lecithin; alkane sulfonates, alkylbenzene sulfonates, fatty alcohol sulfates, fatty alcohol polyglycol ethers, fatty alcohol ether sulfates, sulfonated fatty acid methyl esters; fatty alcohol carboxylates; alkyl polyglycosides, sorbitan esters, N-methyl glucamides, sucrose esters; alkyl phenols, alkyl phenol polyglycol ethers, alkyl phenol carboxylates; quaternary ammonium compounds, esterquats, carboxylates of quaternary ammonium compounds.

Suitable rheology additives are known in the art and can be selected from: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization. It is preferred that at least one rheology additive is selected from the group consisting of fumed silica (Cab-O-Sil^{®} TS-720), Jelucel^{®} H30, Collacral^{®} DS 6256, Collacral^{®} HP, Collacral^{®} HS, Collacral^{®} LA 30, Collacral^{®} LR 8989, Collacral^{®} LR 8990, Collacral^{®} PU 75, Collacral^{®} PU 85, Collacral^{®} VAL, Latekoll^{®} D, Latekoll^{®} P, AEROS!L@ R 104, AEROS!L@ R 200, AEROS!L@ R 202, AEROS!L@ R 300, AEROS!L@ R 812, Xanthan gum, algin, casein, carrageenan, guar gum, AEROS!L@ R 7200, AEROSIL^{®} R 8200, AEROSIL^{®} R 9200, Cab-O-Sil^{®} TS-382, Cab-O-Sil^{®} TS-530, AEROS!L@ R 805, AEROS!L@ R 380, HDK^{®} H20RH, Crayvallac^{®} SLX, K-Stay 501, Luvothix^{®} AB, 35 Cab-O-Sil^{®} TS 610, Cab-O-Sil^{®} M5, Cab-O-Sil^{®} TS-723, Cab-O-Sil^{®} M-70, Cab-O-Sil^{®} LM-150, Cab-O-Sil^{®} HS-5, and combinations of two or more thereof, preferably selected from the group consisting of AEROS!L@ R 200, AEROS!L@ R 812, AEROSILO 805, Cab-O-Sil^{®} TS-720, Cab-O-Sil^{®} MS and combinations of two or more thereof. It is preferred that at least one rheology additive is fumed silica (Cab-O-Sil^{®} TS-720 and/or AEROSIL^{®} R812).

It is preferred that the amount of at least one rheology additive in component (A) or component (B) is in the range of 0 to 5 weight %, preferably in the range of from 0.01 to 3 weight %, more preferably 0.1 to 2.5 weight % based on the total weight of component (A) or component (B) respectively. It is preferred that at least one rheology additive is present in both component (A) and component (B) in the ranges as described herewith.

### Adhesion promoter

The reactive resin composition may additionally comprise at least one adhesion promoter, preferably in an amount ranging from 1 to 10 weight %, more preferably in the range of from 1.5 to 4 weight % based on total weight of the reactive resin composition. It is preferred that component (A) and/or component (B) comprise at least one adhesion promoter. It is preferred that component (A) comprises at least 5 weight % of at least one adhesion promoted based on total weight of component (A), preferably in the amount of 1 to 10 weight %, preferably in an amount 1.5 to 3 weight %. It is preferred that component (B) comprises at least 5 weight % of at least one adhesion promoted based on total weight of component (B), preferably in the amount of 1 to 10 weight %, preferably in an amount 1.5 to 3 weight %.

By using an adhesion promoter, the crosslinking of the borehole wall with the dowel compound is improved such that the adhesion increases in the cured state. This is important for the use of a dowel compound, e.g., in boreholes drilled with a diamond drill, and increases the failure bond stress. Suitable adhesion promoters are selected from the group of silanes which are functionalized with further reactive organic groups and can be incorporated into the polymer network. This group comprises, for example, 3-(meth)acryloyloxypropyltrimethoxysilane, 3-(meth)acryloyloxypropyltriethoxysilane, 3-(meth)acryloyloxymethyltrimethoxysilane, 3-(meth)acryloyloxymethyltriethoxysilane, vinyltrimethoxysilane, vinyltriethoxysilane, functionalized tetraethoxysilane, functionalized tetramethoxysilane, functionalized tetrapropoxysilane, functionalized ethyl or propyl polysilicate, and mixtures of two or more thereof. In this respect, reference is made to the application DE 10 2009 059210.

Present invention further relates to a multi-component reactive resin system, comprising the reactive resin composition according to any one of the embodiments as disclosed herewith, wherein the system is separated in reaction inhibiting manner.

It is preferred that the multi-component reactive resin system according to the present invention is in a form of a two-component system consisting of component (A) and component (B), wherein component (A) comprises a) at least one compound of Formula (I) and b) at least one transition metal in the form of a salt, a compound, a complex or a mixture of two or more thereof; and wherein component (B) comprises c) at least one sulfinate salt and/or at least one sulfinic acid.

It is preferred that in the multi-component reactive resin system according to the present invention, component (A) and/or component (B) further contain inorganic and/or organic additives and fillers. It is preferred that the multi-component reactive resin system according to the present invention comprises any or all the further additives and constitutes as described relating to the reactive resin composition according to the present invention.

Present invention also relates to a use of the reactive resin composition according to any one of the embodiments as disclosed herewith or the multi-component reactive resin system according to any one of the embodiments disclosed herewith for fastening anchoring means in substrates.

Present invention further relates to a method for the chemical fastening of constructions elements in boreholes, wherein the resin composition according to any one the embodiments as disclosed herewith or the multi-component reactive resin system according to any one of the embodiments as disclosed herewith is used for chemical fastening.

The invention is explained in greater detail in the following with reference to a number of examples. All examples and drawings support the scope of the claims. However, the invention is not limited to the specific embodiments shown in the examples.

### EXAMPLES

Unless stated otherwise, all constituents of the compositions that are listed here are commercially available and were used in the usual commercial quality.

**Table 1: Names of components and their description**

| **Name or abbreviation** | **Description** | **Supplier** |
|---|---|---|
| Visiomer^{®} 1,4-BDDMA | 1,4-Butandiol dimethacrylate | Evonik Performance Materials GmbH |
| 2-HPMA | 2-Hydroxypropyl methacrylate | INCHEM Chemiehandel GmbH |
| UMA-121 | Urethane methacrylate resin | Hilti, prepared according to WO2019/007667, example C1: the resin was prepared and further used as a master batch in mixing with BDDMA in a mass ratio of 65/35 |
| Visiomer^{®} PEG 200 DMA | Polyethyleneglycol 200-dimethacrylate | Evonik Röhm GmbH |
| Cu(acac)₂ | Copper(II) acetylacetonate | Sigma-Aldrich |
| SAC2 | 4-Methyl-N-tosylbenzenesulfonamide | TCI |
| pTSS | Sodium *p*-toluenesulfinate tetrahydrate | TCI |
| DMPT | N,N-Dimethyl-*p*-toluidine | Sigma-Aldrich |
| MeOH | Methanol | Sigma-Aldrich |

### Manufacture of components (A) and (B)

Components (A) and (B) were prepared separately.

In examples A1 to A4 first the liquid ingredients were combined. The solid reactive ingredients were added and dissolved first. Then, the rest of the solid ingredients were added and stirred for 1h with a magnetic stirrer (400rpm) at 50°C.

### Examples A1 to A4: determination of curing temperature (gel time)

To avoid premature gelation of the polymerizable monomers, 2K systems having component (A) component (B) were prepared see Table 2 below. These two components (A) and (B) were mixed immediately before the measurement in a volume ratio of 1:1 (A1-A3) and 5:1 (A4) respectively using a wooden spatula.

A gel timer was used to record temperature-time curves in order to determine the maximum curing temperature. The gel timer has been developed in-house according to DIN 16945 points 6.2.2 and 6.3. The gel timer contained a thermostatic water quench that was annealed electronically. With the individual temperature control, measurements at different temperatures were possible. The gel timer was started 30 minutes before the start of the measurement in order to reach the desired temperature at the beginning of the measurement. The measurements for examples A1 to A4 were carried out at 25 ° C. The two components (A) and (B) were stored at 25 °C for at least two hours before measurement.

These two components (A) and (B) of the examples A1 to A4 were mixed immediately before the measurement with the respective ratios using a wooden spatula. The resulting mixture was filled into a test tube (at same volumes) to which a heat sensor was added. The test tube and thermocouple respectively were immersed in a thermostatic water quench. The measurement was completed as soon as the peak temperature was reached.

**Table 2: Examples A1 to A4**

| **Components** | **A1** | **A2** | **A3** | **A4** |
|---|---|---|---|---|
| **Component (A)** | | | | |
| Visiomer^{®} 1,4-BDDMA | 74.24 | 24.50 | 24.50 | |
| 2-HPMA | 24.75 | 73.48 | 73.49 | |
| UMA-121 | | | | 34.52 |
| Visiomer^{®} PEG 200 DMA | | | | 64.11 |
| Cu(acac)₂ | 0.01 | 0.02 | 0.01 | 0.02 |
| SAC2 | 1 | 2 | - | 1.35 |
| 10% SAC2 solution in methanol | | | 2 | |
| | | | | |

| **Component (B)** | | | | |
|---|---|---|---|---|
| Visiomer^{®} 1,4-BDDMA | 74.25 | 24.5 | 24.62 | |
| 2-HPMA | 24.75 | 73.5 | 73.88 | |
| UMA-121 | | | | 34.53 |
| Visiomer^{®} PEG 200 DMA | | | | 64.13 |
| DMPT | 0.5 | 1 | 0.5 | 0.67 |
| pTSS | 0.5 | 1 | - | 0.67 |
| 10% pTSS solution in water | | | 1 | |
| | | | | |
| Volume mixing ratio | 1:1 | 1:1 | 1:1 | 5:1 |
| Time to 35°C in min | 1.85 | 2.23 | 1.50 | 0.30 |
| Time to 50°C in min | 2.20 | 2.55 | 1.68 | 0.42 |
| Time to 80°C in min | 2.25 | 2.60 | 1.75 | 0.50 |
| Peak time in min | 2.80 | 2.90 | 2.45 | 1.47 |
| Peak temperature in °C | 172.60 | 166.33 | 168.88 | 117.23 |

As can be seen from the examples A1 to A3 with the reactive resin composition has optimal peak time and peak temperature showing a successful curing. Example A4 shows that the presented initiator system also works with resins.

## Claims

1. A reactive resin composition comprising a peroxide-free initiator system and at least one radically polymerizable compound, wherein the at least one radically polymerizable compound is a methacrylate comprising compound,
wherein the peroxide-free initiator system comprises:
b) at least one compound of Formula (I) 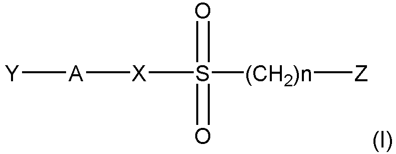
wherein independently from each other:
Y is optional; or Y is an optionally substituted aromatic ring;
A is C=O, S=O, O=S=O, H, C1-C6 alkyl, C1-C8 cycloalkyl, C1-C8 heterocycloalkyl,
C1-C6 alkyl ester, or at least one optionally substituted araliphatic group;
X is NH, NHN, urea, NF, NCI, NBr, Nl, N-formyl, N-methacryl, or N⁻(cation),
wherein preferably 'cation' is selected from the cation of lithium, sodium, potassium, calcium, or combinations of two or more thereof;
Z is an aromatic ring, a phthalimide, or an isoquinolinedione, independently from each other optionally substituted; or wherein Y and Z are joined together in the same aromatic ring or ring structure;
n is 0 to 4;
b) at least one transition metal in the form of a salt, a compound, a complex or a mixture of two or more thereof;
c) at least one sulfinate salt and/or at least one sulfinic acid; and
d) at least one tertiary amine and/or at least one heterocyclic compound comprising at least one N-N single bond, wherein the N-N bond is in the ring of said heterocycle.

2. The reactive resin composition according to claim 1, wherein optionally substituted aromatic ring in Y, at least one optionally substituted araliphatic group in A and an aromatic ring, a phthalimide, or an isoquinolinedione in Z are optionally and independently from each other substituted at up to five positions on the aromatic ring by at least one C1-C6 alkyl group, or at least one alkoxy group, or at least one halo group, or combinations of two or more thereof.

3. The reactive resin composition according to claim 1 or 2, wherein the compound of Formula (I) is selected from the group consisting of saccharin, saccharin derivatives, saccharin salts, di-toluene-4-sulfonamide, N-methyl-p-toluenesulfonamide, *p-*toluenesulfonamide, N-cyclohexyl-p-toluenesulfonamide, Tolbutamide, Tolazamide, Gliquidone, Gliclazide, 1,3-diphenylacetone p-tosylhydrazone, t-Butylbezoyl toluylsulfonamide, methylbenzoyl toluylsulfonamide, methoxybenzoyl toluylsulfonamide or a mixture of two or more thereof, more preferably selected from the group comprising saccharin, sodium saccharin, di-toluene-4-sulfonamide or a mixture of two or more thereof.

4. The reactive resin composition according to any one of claims 1 to 3, wherein the amount of at least one compound of Formula (I) is in the range of from 0.001 to 10 weight % based on the total weight of the reactive resin composition.

5. The reactive resin composition according to any one of claims 1 to 4, wherein the at least one transition metal in the form of a salt, a compound, a complex or a mixture of two or more thereof is selected from the group consisting of copper, iron, vanadium, manganese, cerium, cobalt, zirconium, bismuth, or mixtures of two or more thereof, preferably the at least one transition metal is copper in the form of a salt, a compound, a complex or a mixture of two or more thereof.

6. The reactive resin composition according to any one of claims 1 to 5, wherein the amount of at least one transition metal is in the range of from 0.001 to 10 weight % based on the total weight of the reactive resin composition.

7. The reactive resin composition according to any one of claims 1 to 6, wherein the at least one sulfinate salt is an aryl sulfinate salt optionally substituted at up to five positions by at least one C1-C6 alkyl group, optionally substituted C1-C6 alkyl sulfinate salt or a mixture of two or more thereof.

8. The reactive resin composition according to any one of claims 1 to 7, wherein the at least one sulfinate salt is sodium *p*-toluenesulfinate, sodium *p*-toluenesulfinate hydrate, sodium 4-vinylbenzenesulfinate, sodium 4-tert-butylbenzenesulfinate, sodium propane-2-sulfinate, sodium 1-methyl 3-sulfinopropanoate or mixture of two or more thereof.

9. The reactive resin composition according to any one of claims 1 to 8, wherein the amount of one sulfinate salt and/or sulfinic acid is in the range of from 0.001 to 10 weight % based on the total weight of the reactive resin composition.

10. The reactive resin composition according to any one of claims 1 to 9, wherein the at least one tertiary amine comprises at least one nitrogen having a formula NR1R2R3, wherein R1, R2, and R3 are independently from each other selected from the group comprising C1-C8 linear or branched, optionally substituted, alkyl group; C1-C8 optionally substituted cycloalkyl group; optionally substituted heteroaryl group; optionally substituted up to 4 positions aryl group; optionally substituted up to 4 positions araliphatic group; or optionally substituted heteroaromatic ring.

11. The reactive resin composition according to any one of claims 1 to 10, wherein the at least one tertiary amine is selected from a group comprising para-toluidine ethoxylate(Bisomer PTE), *N*,*N*-dimethylaniline, *N*,*N*-dimethyl-p-toluidine, *N*,*N-*dimethyl-*o*-toluidine, 4-*tert*-butyl-*N*,*N*-dimethylaniline, diethylaniline, 4-diethylaminobenzaldehyde, 2,2'-(4-methylphenylimino)diethanol, 2,2'-(*m-*tolylimino)diethanol, diisopropanol-*p*-toluidine, 2-(*N*-ethyl-*N*-*m*-toluidino)ethanol, 7-diethylamino-4-methylcoumarin, crystal violet and combinations of two or more thereof.

12. The reactive resin composition according to any one of claims 1 to 11, wherein the methacrylate comprising compound is selected from the group consisting of compounds comprising urethane(meth)acrylate, compounds comprising epoxy(meth)acrylate, alkoxylated bisphenols comprising methacrylates, compounds based on further ethylenically unsaturated compounds and combinations of two or more thereof.

13. The reactive resin composition according to any one of claims 1 to 12, further comprising at least one filler.

14. The reactive resin composition according to any one of claims 1 to 13, further comprising at least one reactive diluent.

15. A multi-component reactive resin system, comprising the reactive resin composition according to any one of claims 1 to 14, wherein the system is separated in reaction inhibiting manner.

16. The multi-component reactive resin system according to claim 15, in a form of a two-component system consisting of component (A) and component (B), wherein component (A) comprises a) at least one compound of Formula (I) and b) at least one transition metal in the form of a salt, a compound, a complex or a mixture of two or more thereof; and wherein component (B) comprises c) at least one sulfinate salt.

17. A use of the reactive resin composition according to any one of claims 1 to 14 or the multi-component reactive resin system according to any one of claims 15 to 16 for fastening anchoring means in substrates.

18. A method for the chemical fastening of constructions elements in boreholes, wherein the resin composition according to any one of claims 1 to 14 or the multi-component reactive resin system according to any one of claims 15 to 16 is used for chemical fastening.
